# EUROPEAN PATENT APPLICATION

(11) **EP 4 112 365 A1**
(43) Date of publication of application: **04.01.2023**
(21) Application number: 22191138.1
(22) Date of filing: 22.12.2015
(51) Int. Cl.: B60L 53/14, B60L 53/30, B60L 53/31, B60L 53/60

(54) **A SYSTEM FOR DYNAMIC PHASE-LOAD DISTRIBUTION WHEN CHARGING ELECTRICAL VEHICLES**

(62) Divisional of application: 15202022.8
(71) Applicant: Zaptec IP AS, 4068 Stavanger (NO)
(72) Inventor: Stojanovic, Zoran, 4100 Jørpeland (NO); Helmikstøl, Jonas, 4120 Tau (NO); Valebjørg, Vegard, 4353 Klepp Stasjon (NO); Johansen, Brage W., 4052 Røyneberg (NO); Næsje, Kjetil, 4314 Sandnes (NO)
(74) Representative: Onsagers AS

(57) **Abstract**

The invention concerns a 3-phase charging assembly for optimal use of available electrical power when charging electrical vehicles, EV's. The charging assembly comprises a 3-phase distribution cable supplying power by means of subsidiary isolated conductors for each phase L₁ in, L₂ in, L₃ in and a neutral conductor N in, at least one electric vehicle supply equipment, EVSE, comprising internal circuitry with an input electrically connected to the subsidiary isolated conductors L₁ in, L₂ in, L₃ in of said 3-phase distribution cable, and an output L₁ out, L₂ out, L₃ out electrically connectible to at least one EV for providing power for charging. The EVSE further comprises a plurality of primary relays R5, R7, R9 each configured to connect or disconnect electrical power provided by the conductors for each phase L₁ in, L₂ in, L₃ in at the input to respective output L₁ out, L₂ out, L₃ out, where at least one overcurrent protector is connected in series with each primary relay R5, R7, R9; secondary relays R6, R8, RIO - R16 configured in a relay matrix for enabling routing of a 1-phase load at the output L₁ out to phases L₂ in, L₃ in at the input, and a control system comprising communication means, wherein the control system changes relay status by connecting or disconnecting each of said primary and secondary relays R5 - R16 and to transmit and receive relay status information to and from other EVSEs connected to the 3-phase distribution cable.

## Description

### Technical Field

The invention relates to a 3-phase charging assembly and more specifically to a system for optimal use of available electrical power, based on dynamic phase load distribution, when charging batteries of electric vehicles.

### Background and prior art

In a common prior art 3-phase charging assembly for an electric vehicle, EV, electric vehicle supply equipment, EVSE, providing power to an outlet of a charging station is permanently connected to a specific phase, causing a risk for error due to unbalance when more than three EVs are charging. Regulations require that, in the absence of a dedicated arrangement configured to avoid overload of fuses, the circuit should allow disconnection of an EVSE from a distribution line when maximum power available is used. In practise, most electricians of EVSE must limit the number of charging spots corresponding to the number of EVSE units or limit the maximum charging power for each EVSE unit, or to upgrade the power available for charging.

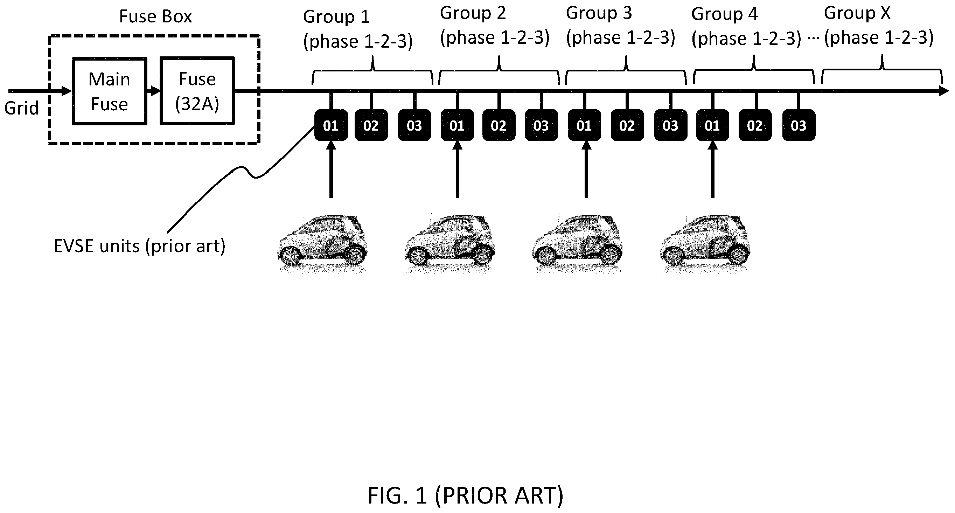

Figure 1 shows an example of a prior art system which includes four EVs being charged via a 3-phase network connected to a grid via a fuse box with fuses defining maximum power available for changing. The figure shows a total of 12 EVSE units that are connected to a 3-phase network via a common rail or distribution cable. In a worst-case scenario, each of the EVSE units is rigidly connected to the same phase. In a 230 V network with a rated current of 32 A, a work case scenario as shown in figure 1 will provide an EV distribution power of only 7.4 kW. Every EV may thus receive a maximum charging power of about 1800 W since any load exceeding this level would trip the fuse. Hence, due to the rigid load distribution all potential capacity provided by all phases in the circuit cannot be utilized.

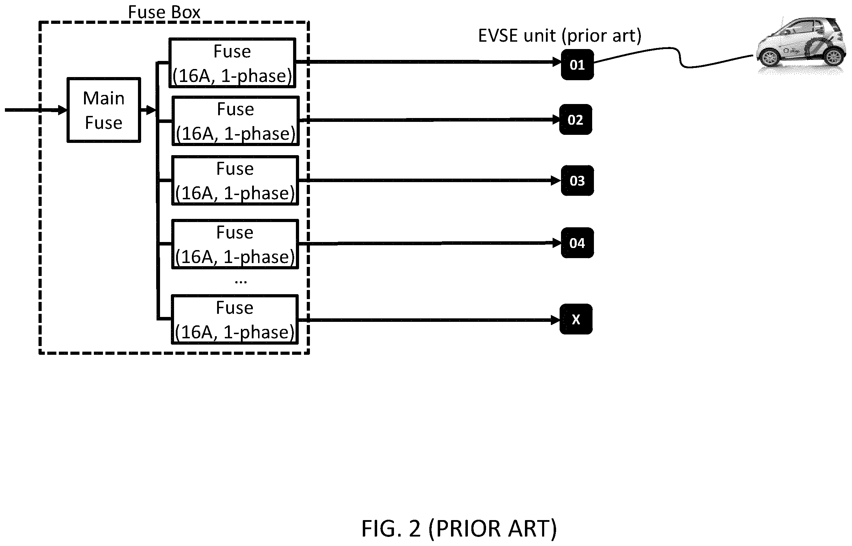

Figure 2 shows an alternative setup of several EVSE units connected to one phase (1-phase) of a 3-phase network. In contrast to the setup of figure 1, the 3-phase charging assembly comprises a 3-phase network that splits up into a number of parallel one-phase distribution lines with EVSE's connected. Such a configuration results in both an increased need for cables, as well as a significant limitation of maximum charging level for each unit. The latter is a consequence of the above-mentioned regulations related to the requirement of providing sufficient power from the main supply to support full theoretical load.

The principle of dynamically distributing one-phase load on a 3-phase network is known. WO 2012/175332 A1 describes an example of this where a device is configured to control a switch for selecting any phase for supplying power to an electrical component. Selected phase depends on respective load of each phase in the 3-phase energy network.

Prior art solutions do however lack automatic and seamless routing of 1 -phase loads and 3-phase loads over same 3-phase distribution cable for optimal load balance and use of available power, and where this is based on different information like total load on the 3-phase distribution cable, load on each phase, total power available for charging, power and time required for charging of connected EVs etc.

It is thus an object of the invention to provide a system that renders more effective and seamless distribution and load balance of available power in a 3 -phase charging assembly by ensuring that there are excess power available for quick charging when few EVs are connected, and that maximum power drawn is below maximum power available, thus representing low or no risk when many EVs are connected.

Another object of the invention is to automatically route available power in the 3-phase charging assembly in order to prioritize specific needs for devices connected to the same 3-phase power supply, and/or other power requirements defined by local or regional network operators due to for example power shortage, overheating in transformers, local technical problems, etc.

### Summary of the invention

The invention is set forth and characterized in the main claims, while the dependent claims describe other characteristics of the invention.

More specifically, the invention is defined by a 3-phase charging assembly for charging electrical vehicles, EV's, comprising:
- a 3-phase distribution cable supplying power by means of subsidiary isolated conductors for each phase L₁ in, L₂ in, L₃ in and a neutral conductor N in,
- at least one electric vehicle supply equipment, EVSE, comprising internal circuitry with an input electrically connected to the subsidiary isolated conductors L₁ in, L₂ in, L₃ in, N in of said 3-phase distribution cable, and an output L₁ out, L₂ out, L₃ out, N out electrically connectible to at least one EV for providing power for charging, where the EVSE further comprises:
- primary relays R5, R7, R9 each configured to connect or disconnect electrical power provided by the conductors for each phase L₁ in, L₂ in, L₃ in at the input to respective output L₁ out, L₂ out, L₃ out, where at least one overcurrent protector is connected in series with each primary relay R5, R7, R9,

- secondary relays R6, R8, R10 - R16, where relays R6, R8, R10 are connected between L₁ in, L₂ in, L₃ in and L₁ out, L₂ out, L₃ out respectively, and where secondary relays R11 - R14 enable routing of a 1-phase load at the output L₁ out to phases L₂ in , L₃ in at the input, in that one relay R11 is connected from phase 2 conductor L₂ in at the input to the overcurrent protector connected to R5, one secondary relay R12 is connected from phase 2 conductor L₂ in a the input to phase 1 conductor L₁ out at the output, secondary relay R13 is connected from phase 3 conductor L₃ in at the input to the overcurrent protector connected to R5, one secondary relay R14 is connected from phase 3 conductor L₃ in at the input to phase 1 conductor L_{1 out} at the output, secondary relays R15 - R16 are connected to the neutral conductor N out output from phase 2 conductor L₂ in and phase 3 conductor L₃ in, respectively, and at least one relay R4 is connected between the neutral N in input conductor and the neutral N out output,
- a control system comprising communication means, wherein the control system changes relay status by connecting or disconnecting each of said primary relays R5, R7, R9, and secondary relays R6, R8, R10 - 16 to switch between 3-phase charging and 1-phase charging on a selected input phase based on capacity and measured load on each phase, and where relay status information is transmitted and received to and from other EVSEs connected to the 3-phase distribution cable.

Several advantageous embodiments of the 3-phase charging assembly are defined in the dependent claims.

In the following description, numerous specific details are introduced to provide a thorough understanding of embodiments of the claimed assembly. One skilled in the relevant art will however recognize that these embodiments can be practiced without one or more of the specific details, or with other components, systems, etc. In other instances, well-known structures or operations are not shown, or are not described in detail, to avoid obscuring aspects of the disclosed embodiments.

### Brief description of the drawings

Fig. 1 is a schematic showing a prior art 3-phase charging assembly, where several EVSE's are connected to a single distributing cable sharing a common 32A fuse, the latter being connected to a main fuse of a 3-phase network grid.
Fig. 2 is a schematic of a prior art 3-phase charging assembly, where several EVSE's are connected in a parallel manner to a main fuse of a 3 -phase network via separate 16 A fuses.
Fig. 3 is a schematic of a 3-phase charging assembly in accordance with the invention, where several EVSE's are connected along a single distributing cable sharing a common 32 A fuse, the latter being connected to a main fuse of a 3 -phase network grid.
Fig. 4 is a schematic of a 3-phase charging assembly in accordance with the invention, where groups of up to 15 EVSE's (Z) are connected to each of a plurality of distributing cables sharing common 32 A fuses, and where the plurality of common 32 A fuses are connected in a parallel manner to a main fuse of the 3-phase network grid.
Fig. 5 is a circuit diagram of a 3-phase network having a relay configuration ensuring phase-specific connection and disconnection from the power supply.
Fig. 6 is a circuit diagram of a 3-phase network having a relay configuration ensuring both phase-specific connection and disconnection from the power supply as well as re-configurations between IT, TN and TT systems.

### Detailed description of the invention

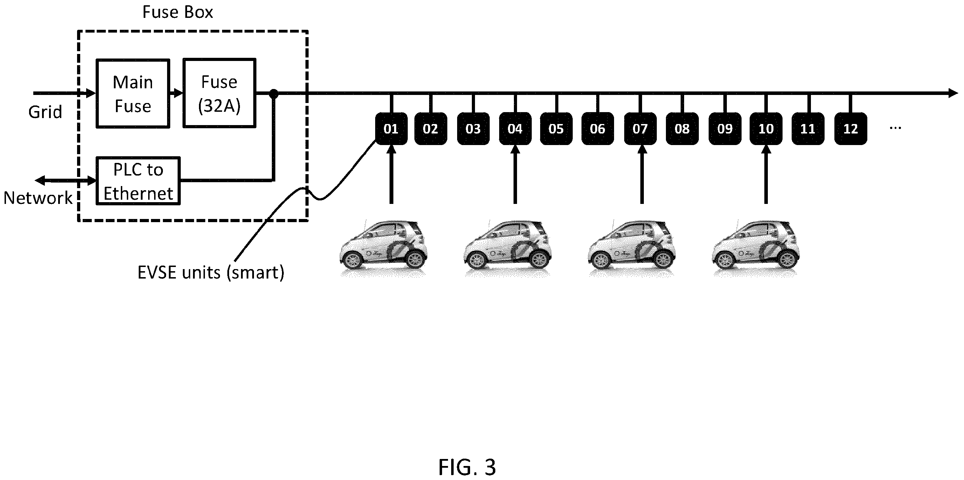

As shown in both figure 1 and figure 3, several EVSE units are connected to the same 3-phase network via a common distributing cable. However, in contrast to the prior art solution shown in figure 1 the EV's shown in figure 3 are connected to EVSE units comprising an intelligent phase distribution system according to the present invention. Based on 3-phase power measurements within each of the EVSE units and exchange of data, comprising this information, between each EVSE unit within a certain time period, it is possible to utilize each phase of the 3-phase in the most efficient way.

As an example, the first of the four EV's in figure 3 is connected to the phase having the highest available capacity measured by the EVSE that the EV is connected too. Identical power measurements are performed by the remaining EVSE's and each EV is in turn connected to the phase providing the best capacity at the time of connection.

The features of power measurements are integrated in each EVSE and information flow between each EVSE, comprising this power information, is used in an energy distribution algorithm which will be further described below. This is controlled and monitored by means of a control unit such as a power line communication (PLC) system connected to a network (e.g. wireless local area network (WLAN)) or any variation thereof. This may further be connected to the Internet ensuring remote control of energy distribution. A PLC system can be used to logically interconnect EVSE units. Instead of a PLC, a separate communication line may be used, running parallel to conventional power lines. Implementing and using the EVSE's according to the invention is the foundation for effective power distribution in a 3-phase charging assembly.

After exchanging information, each EVSE will connect an EV to a specific phase of the 3-phase power lines according to the capacity and current load detected on the phase. The purpose is optimal use of the capacity of each phase of a 3 -phase system.

An example of optimal use of the capacity of a 3-phase system is when a first EV receives 32 A at phase 1, a second EV receives 32 A at phase 2 and a third and fourth EV receive 16 A at phase 3, resulting in a total power of 22 kW (230 V x 32 A x 3) distributed to the connected EVs. Hence, the network may deliver a total power that is about 3 times the available power in the prior art 3-phase network described earlier with reference to figure 1.

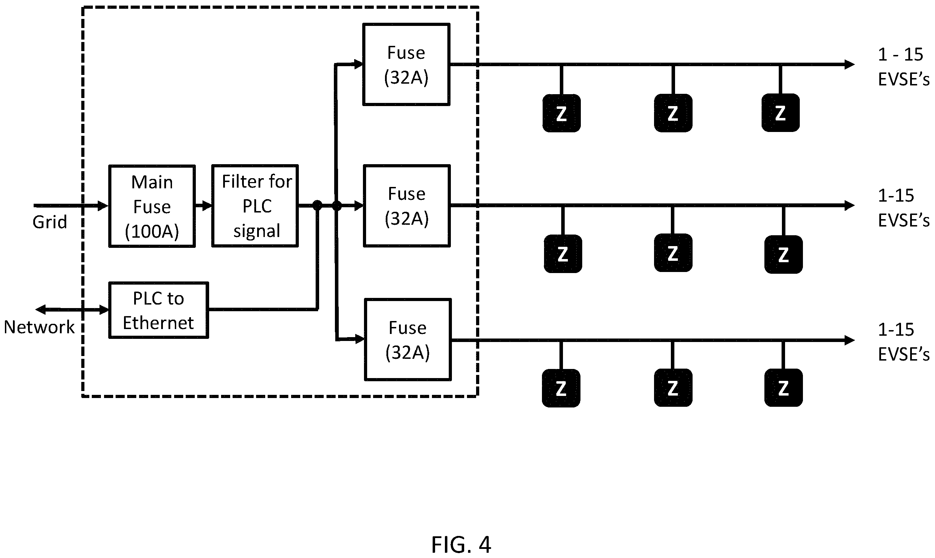

Figure 2 and figure 4 both show a network where several fuses are connected in a parallel manner to a main fuse. However, in contrast to the prior art solution shown in figure 2, the power distributed to the various EV's shown in figure 4 is controlled and optimized by the energy distribution algorithm in a similar way as described above with reference to figure 3.

To achieve a desired phase-specific load distribution a new system according to the invention may employ one or more of the following:
- an increased number of integrated power switches, i.e. relays and associated control electronics compared to a conventional network,
- a control system that logically interconnect most of or all EVSE units connected to the same circuit/sub-circuit sharing the same fuse,
- means for automatically identifying connection of a new EVSE to the same circuit/sub-circuit,
- means for automatically identifying replacement of an EVSE,
- means for reading energy storage capacity and present charging level of each of the connected EVs.

Examples of means for automatically identifying connection of a new EVSE may be based on pre-registered Radio Frequency Identification, RFID, or any other means for automatically identifying and tracking tags linked to objects.

Further, means for automatically identifying replacement of an EVSE may be Bluetooth, Bluetooth Low Energy or similar systems fitted in dedicated plugs or power points.

And finally, means for reading energy storage capacity and present charging level of each of the connected EVs may be PLC system or WiFi / Bluetooth or logging on to an EV over GPRS (General Packet Radio Service) or any other packet oriented mobile data service. The latter may be achieved by logging on to the EV using username and password if that is made available in an online profile of a user.

This will be a part of the information flow between the different EVSE's and is the basis for which phase to connect a specific EV to.

Information about energy storage capacity and charging level may also be an aid to identify specific needs during a charging procedure and will thus be a parameter when setting up priority rules in the above-mentioned energy distribution algorithm.

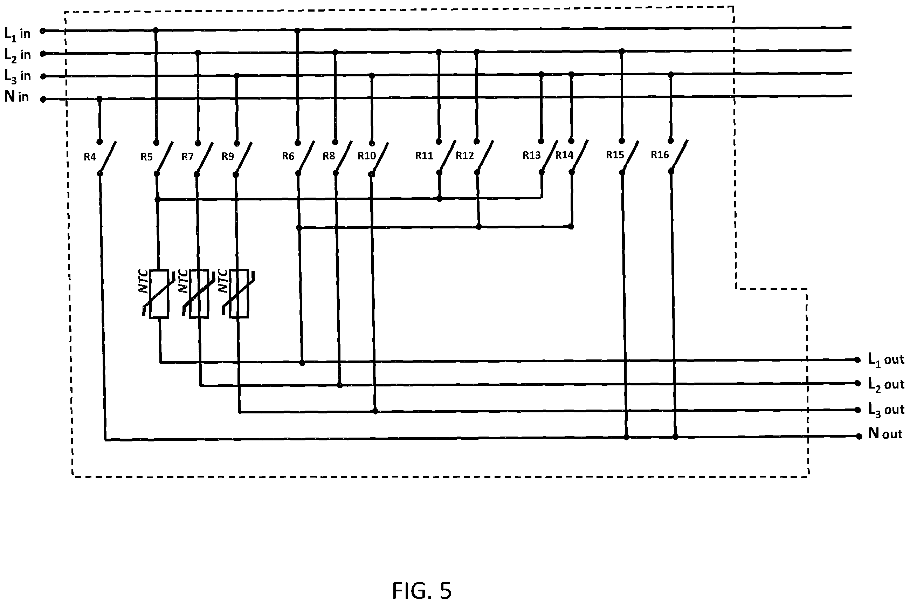

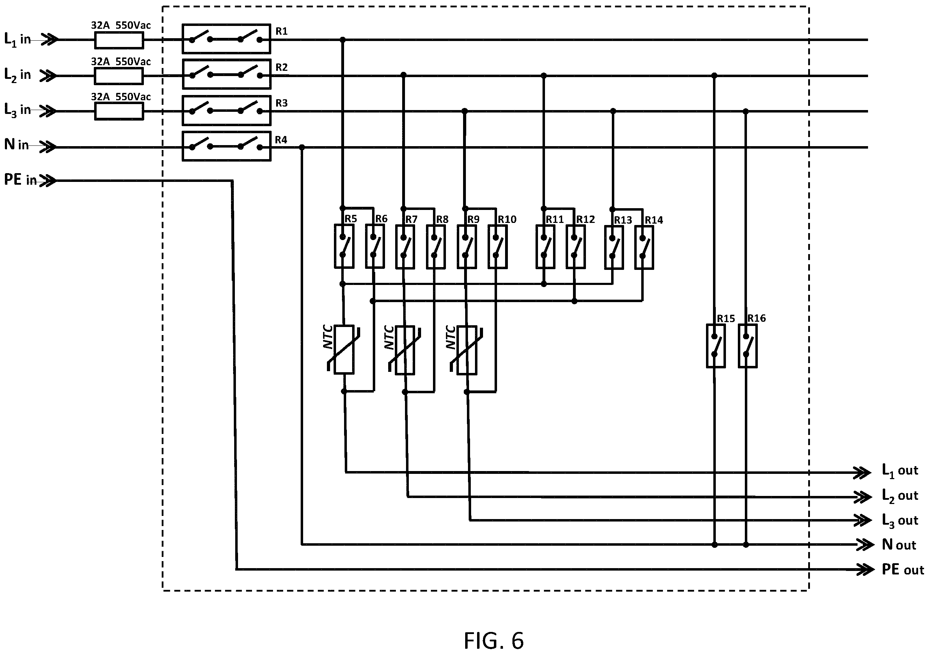

Figures 5 and 6 show specific embodiments of circuit configurations according to the invention, allowing phase specific disconnection from power supply of a 3-phase network system, thereby allowing both one-phase and/or 3-phase charging of EVs. Phase specific disconnection implies user controlled or automatic disconnection of one or 3-phase loads from the 3-phase network system by operating one or more relays. The circuits and components within the stippled frames in the figures are preferably integrated into an EVSE unit. By connecting relays in a matrix configuration as indicated in the figures, a dynamic distribution of available 1-phase power, from any of the input phases, to randomly positioned EVs connected to the 3-phase distribution cable is possible, as well as switching between 3-phase and 1-phase charging on any of the input phases. Further, the 3-phase charging assembly may decide whether an EV should charge on one-phase or 3-phase, depending on available power within the grid.

One of the advantages of the dynamic distribution of power is the fact that a typical EV is not able to charge with a current of less than 6 A, independently on number of phases. The minimum power per EV for 3-phase charging is significantly more than 6 A, thus limiting the number of simultaneous EV charging. When required current is available on one of the phases in the 3-phase system according to the invention, an EV connected to one of the EVSE's is automatically connected to that phase.

The present invention is a 3-phase charging assembly for optimal use of available electrical power when charging EV's. The assembly comprises a 3-phase distribution cable supplying power by means of subsidiary isolated conductors for each phase L₁ in, L₂ in, L₃ in and a neutral conductor N in. It further comprises at least one electric vehicle supply equipment, EVSE's, each with internal circuitry with an input electrically connected to one or more of the subsidiary isolated conductors L₁ in, L₂ in, L₃ in of said 3-phase distribution cable, and an output L₁ out, L₂ out, L₃ out electrically connectible to at least one EV for providing power for charging.

Each EVSE comprises a plurality of primary relays R5, R7, R9 configured to connect or disconnect electrical power provided by the conductors for each phase L₁ in, L₂ in, L₃ in at the input.

Each EVSE further comprises plurality of secondary relays R6, R8, R10 - R16 configured in a relay matrix enabling switching between 3-phase charging and 1-phase charging from a selected input phase.

The primary relays R5, R7, R9 are preferably non-latching relays, and the secondary relays R6, R8, R10 - R16 are latching relays.

Each EVSE further comprises a control system comprising communication means, wherein the control system is configured to connect or disconnect each of said primary and secondary relays R5 - R16 and to transmit and receive relay status information to and from other EVSE's. This information can be communicated between each EVSE, at least between EVSE's connected to same one phase subsidiary circuit, and/or via devices connected to Internet.

The 3-phase charging assembly employs a method for mounting, quality assuring, registering and if relevant RFID encryption activating dedicated plugs / power points prior to EVSE installation. This should preferably be performed by qualified personnel, and the result may be reported using a computer program installed on a device with internet access, for example a mobile app, including information such as Internet date, GPS localization, name of installation contractor and relay value, e.g. 32 A, 64 A, etc.

In an embodiment of the invention the network system works for both IT and TN networks having phase-to-phase voltages of 230 V and 400 V respectively to ensure high flexibility. Further, is it often considered beneficial to upgrade the network from a 230 V IT network to a 400 V TN network. In a similar way, a configuration also including a TT network is feasible.

Figure 5 shows one embodiment of the invention with an electrical circuit comprising at least one primary relay R5, R7, R9 and at least one overcurrent protector, e.g. thyristors such as NTC, that is connected between each phase conductors L₁ in, L₂ in, L₃ in of the 3-phase network system and a 1- or 3-phase power outlet, representing a standard electrical line of a 3-phase system. Further, a conductor with at least one relay R4 is connected between the neutral input conductor N in and the neutral outlet N out of the standard electrical line. This configuration ensures that all types of charger system may be connected to the 3-phase system.

To enable user controlled or automatic connection and disconnection from the network system, additional electrical lines with relays may be added. More specifically, nine additional electrical lines with associated secondary relays R6, R8, R10 - R16 are connected to the phase conductors L₁ in, L₂ in, L₃ in as shown in figure 5. Three of the additional electrical lines R6, R8, R10 are connected from each of the phase conductors L₁ in, L₂ in, L₃ in of the power supply to corresponding phase conductors of the standard electrical line bridging their relays R5, R7, R9.

Two additional electrical lines R11 - R12 are connected from phase 2 conductor L₂ in to phase 1 of the standard electrical line and phase 1 of the additional electrical line, respectively, bridging their relays. Two additional electrical lines R13 - R14 are connected from phase 3 conductor L₃ in to phase 1 standard electrical line and phase 1 additional electrical line, respectively, bridging their relays. Two additional electrical lines R15 - R16 are connected to the neutral conductor from phase 2 conductor L₂ in and phase 3 conductor L₃ in, respectively, bridging its relay.

Figure 6 shows another embodiment of the invention with an example of a circuit configuration enabling both 3-phase disconnection, provided by power relays R₁ - R₃ on each phase conductor L₁ in, L₂ in, L₃ in, and one-phase disconnection of loads from the power supply as explained above with reference to figure 5. The circuit configuration further supports load balancing during and after one-phase connection or disconnection. The circuit configuration is similar to that of figure 5, but the circuit further supports all earthing systems, i.e. TT, TN and IT. Fuses are further provided on each input phase conductor L₁ in, L₂ in, L₃ in. A standard electrical line with at least one relay R4 is connected between a neutral N in input conductor and a neutral outlet N out of the EVSE. Overcurrent protectors are connected in series with at least one primary relay R5, R7, R9. The figure also shows a separate communication line PE in, PE out, for communicating with EVSE's, running parallel to conventional power lines.

All necessary relays, as well as any other electrical components not part of the 3-phase charging assembly such as overcurrent protectors, are preferably integrated into respective EVSEs. As mentioned above the relays may be a combination of conventional non-latching relays and latching relays, the latter being advantageous for the matrix part of the circuit configuration since these types uses no power once they are set in a desired position, for example by an electrical impulse. Note that the EVSE-unit should preferably use non-latching relays due to fulfillment of safety regulations.

In many jurisdictions an EVSE-unit must be able to disconnect from a power supply rapidly, also when no power is available. In these cases, non-latching relays are the preferred choice since latching relays need power to change their state.

A latching relay normally has internal magnet(s) holding the switches of a relay in a set position. Only a short pulse is necessary for switching a latching relay from one state to another, e.g. from on to off, thereby saving energy by not requiring a continuously powered coil. Some latching relays have two coils, one for setting and one for resetting, some only have one coil and rely on power polarity reversals to set and reset the relay. Latching relays maintains its state after being actuated. It has no default position and remains in its last set position when drive current stops flowing, thereby reducing energy.

According to the invention, one key element enabling optimal and dynamic load distribution when charging electrical vehicles in a 3-phase charging assembly is the control system with communication means comprised in the EVSE's enabling seamless flow of data between each EVSE and a control unit. Based on measured load data, the control system in an EVSE controls connection or disconnection of the primary and secondary relays to R5 - R16 such that best possible load balance between each phase of the 3-phase power supply is achieved for 1-phase charging of several EV's connected to the same 3-phase distribution cable.

According to one embodiment of the invention, the 3-phase charging assembly further comprises external communication means allowing external communicating of data between the control systems comprised in each of the EVSE's.

External communication may in one embodiment be performed by means of power line communication, PLC, allowing communicating of data between the control systems comprised in each of the at least one EVSE and an external device. Communication between EVSE's and external devices may be performed wirelessly or by wire by using known methods in the field. An external data handling device may contain pre-registered information identifying which of the plurality of one phase subsidiary circuits each EVSE is connected to, e.g. through an associated one phase fuse. An external data handling device may further contain information concerning at least one of the physical location of each EVSE, identification of the person installing each EVSE, and date of installation.

When setting up a complete 3-phase charging assembly in accordance with the invention the following details concerning the communication between the individual EVSE's and control unit should be taken into consideration:
- One or more of the EVSEs preferably comprise means for communicating with nearby EVSEs, in particular if they are located at the same sub-circuit, i.e. sharing the same fuse.
- The communication may be performed locally between the EVSEs, for example by use of a dedicated master, and/or via the Internet. The latter communication is considered most preferably and may involve cloud-based identification with an associated coupling and control system.
- If the communication is Internet based, the charging assembly preferably contains predefined data for each of the positions of the EVSEs as function of the sub-circuit and its associated fuse value. In this way the control system may, at any time, have knowledge of the electrical and physical configuration of the assembly.
- It is also useful to record the exact physical position of each EVSEs, as well as registering service technician ID, date, etc. in view of possible system maintenance and/or qualification/re-qualification for approval purposes.
- The charging assembly should preferably have the possibility of overriding (i.e. changing the power consumption), for example when the local grid supplying power has a reduced amount of available power or if the main fuse is overloaded. This may be done automatically by monitoring devices within the grid or within fuse boxes over the Internet and/or local network. The monitoring may apply known technology such as Systems for Automatic Power Consumption Measurements, AMS systems.
- The communication may be performed by power line communication, PLC, serial communication line, such as RS485, RS422 or RS232, and/or wirelessly, e.g. WiFi, Bluetooth, Bluetooth Low Energy, Zig-Bee, Z-wave, etc.

In one embodiment of the invention a specific EVSE is configured to operate as a master unit controlling the communication of data to and from the other communication means. Based on received data, comprising at least relay status, from other identified EVSE's connected to the same power distribution cable, a master unit will process the data and send specific instructions to the control systems in each of the other EVSE's. Based on the result of the processed data, the master unit will decide the optimal use of available electrical power when charging electrical vehicles by means of said EVSE's. The control system in each EVSE will receive the instructions, and if relevant, route one phase of the output connector to any phase at the input connector, i.e. one output conductors L₁ out is connected to any phase L₁ in, L₂ in, L₃ in at the input of the EVSE by connecting or disconnecting each of said primary and secondary relays R5 - R16 in the EVSE's.

In another embodiment of the invention, an external device other than an EVSE, may operate as a master unit for controlling communication of data to and from the at least one EVSE's.

In one embodiment each EVSE's comprises means for measuring three-phase power consumption and current load, and is configured to transmit this information together with its relay status and ID. This information will be sent to a master unit and provide basis for routing any of the input phases L₁ in, L₂ in, L₃ in to an output phase for 1-phase charging. Current load information from all EVSE's comprised in the same assembly will be transmitted to and assessed by the master unit providing the basis for optimal load balance and utilization of available power from each phase of the 3-phase power supply.

In one embodiment of the invention the means for measuring current load is mounted to the 3-phase distribution cable delivering power to the at least one EVSE, and where this information is transmitted from a master unit, comprised in external communication means or power line communication means, to the at least one EVSE.

This configuration is favourable when only one EVSE is used in the 3-phase charging assembly. This may be the case in a private home installation having a 3-phase power supply. Different electric appliances in a house may be connected to different phases of the power supply loading the phases differently at different times of a day. Power available for a specific phase for charging an EV may thus be limited when charging is to take place. If an EV is connected to a specific phase without knowing the power already drawn from that phase, the main fuse may blow.

According to one embodiment of the invention, a current meter, installed after the main fuse, for measuring instantaneous current running in each phase will provide information on which of the phases having the best capacity at the time. This may be performed by an AMS meter. The measurement data will be transmitted to the control system in the EVSE and will provide the basis for which phase to connect to. The data may be transmitted to the EVSE by means of power line communication or wirelessly. This may be a dynamic process ensuring that the EVSE always is connected to the phase having the best capacity.

This is an example of an installation according to the invention with only one EVSE installed, e.g. at a private house, cabin, or smaller companies, for providing optimal use of available electrical power when charging electrical vehicles.

The full potential of the invention is however realised when several EVSE are comprised in an installation according to the invention.

All data, including power available for charging, current load of the different phases of a 3-phase power supply, time frames where charging can be performed, power consumption of EV's being charged etc., is defined in an energy distribution algorithm making the basis for how each EVSE is controlled, i.e. when can the EVSE be used for charging, how much power is available, which phase to connect to etc.

The above described 3-phase charging system may preferably allow automatic handling of charging based on available information, whether or not to charge EVs, as well as which EVs to receive additional power for heating and defrosting, for example prior to departure, and/or provide distribution and prioritizing of available power being required for this particular purpose.

When a maximum power is drawn from the network during charging of many EVs it may be advantageous to use time sharing protocols. These protocols may be automatically activated if the number of connected EVs exceeds the maximum number of EVs possible in proportion to the minimum allowable charging power per EV.

By measuring both resistive current and reactive current prior and/or during charging, the 3-phase charging assembly allows an automatic estimation of whether an EV should have a charging current that exceed the normal minimum charging current prior to initiating charging.

A 'finger-print' of an EV can be registered based on at least one of:
- the time before impact of a relay,
- the time before start of the charging itself, the ramp-up time until the charging power is achieved,
- the response time during change of power level (e.g. from change of PWM signal to EV),
- reactive current at different charging power and
- difference in reactive current at one-phase and, if relevant, 3-phase charging.

When the 'finger-print' is registered, it is possible to further assess, or even decide, the type and model of a connected EV, thus allowing technical adjustment of the charging progress.

Surveillance of power consumption as function of available power, either locally in accordance with a fuse value or adjusted to the value from a local AMS gauge or a combination thereof, is possible by a solution using cloud storage.

The 3-phase charging assembly preferably also allows decrease or increase of charging power between some or all the EVSEs by a manual or automated cloud storage service. Such adjustment of charging power may be performed by any parties such as the supplier of the EVSE, the electricity plant, the caretaker of the building, etc. The adjustments represent an efficient way of avoiding overcharge further down the grid, e.g. in transformer stations etc., and/or regulating with regards to network charge or maximum power supplied to buildings, parking garages, etc.

According to the invention both required safety functions and phase distribution for providing load balance is fully realized.

Additional charging stations provided with EVSE's according to the invention can be added to the 3-phase power supply of existing charging stations without any needed modifications, making the system cost efficient and flexible. No human interaction is required for setting up and maintaining optimal use of available electrical power when charging several electrical vehicles. In practice different vehicles requiring different power and time periods for being charged will be connected and disconnected to/from the 3-phase distribution cable/line. The 3-phase charging assembly will automatically and seamlessly instruct the control system in each EVSE, included in the assembly, to connect or switch to a specific phase, how much power it may pull from that phase etc. This will be performed continuously based on assessments of current load on the different phases of the 3 -phase power supply, time of day, allocated power provided to a plurality of EVSE's at the time etc.

In the preceding description, various aspects of the assembly according to the invention have been described with reference to illustrative embodiments. For purposes of explanation, specific numbers, systems and configurations were set forth in order to provide a thorough understanding of the apparatus and its workings. However, this description is not intended to be construed in a limiting sense. Various modifications and variations of the illustrative embodiment, as well as other embodiments of the apparatus, which are apparent to persons skilled in the art to which the disclosed subject matter pertains, are deemed to lie within the scope of the present invention.

## Claims

1. A 3-phase charging assembly for charging electrical vehicles, EV's, comprising:
- a 3-phase distribution cable supplying power by means of subsidiary isolated conductors for each phase L₁ in, L₂ in, L₃ in and a neutral conductor N in,
- at least one electric vehicle supply equipment, EVSE, each comprising internal circuitry with an input electrically connected to one or more of the subsidiary isolated conductors L₁ in, L₂ in, L₃ in, N in of said 3-phase distribution cable, and an output L₁ out, L₂ out, L₃ out, N out electrically connectible to at least one EV for providing power for charging,
**characterized in that** each EVSE further comprises:
- primary relays R5, R7, R9 each configured to connect or disconnect electrical power provided by the conductors for each phase L₁ in, L₂ in, L₃ in at the input to respective output L₁ out, L₂ out, L₃ out, where at least one overcurrent protector is connected in series with each primary relay R5, R7, R9,
- secondary relays R6, R8, R10 - R16, where relays R6, R8, R10 are connected between L₁ in, L₂ in, L₃ in and L₁ out, L₂ out, L₃ out respectively, and where secondary relays R11 - R14 enable routing of a 1-phase load at the output L₁ out to phases L₂ in , L₃ in at the input, **in that** one relay R11 is connected from phase 2 conductor L₂ in at the input to the overcurrent protector connected to R5, one secondary relay R12 is connected from phase 2 conductor L₂ in a the input to phase 1 conductor L₁ out at the output, secondary relay R13 is connected from phase 3 conductor L₃ in at the input to the overcurrent protector connected to R5, one secondary relay R14 is connected from phase 3 conductor L₃ in at the input to phase 1 conductor L_{1 out} at the output, secondary relays R15 - R16 are connected to the neutral conductor N out output from phase 2 conductor L₂ in and phase 3 conductor L₃ in, respectively, and at least one relay R4 is connected between the neutral N in input conductor and the neutral N out output,
- a control system comprising communication means, wherein the control system changes relay status by connecting or disconnecting each of said primary relays R5, R7, R9, and secondary relays R6, R8, R10 - 16 to switch between 3-phase charging and 1-phase charging on a selected input phase based on capacity and measured load on each phase, and where relay status information is transmitted and received to and from other EVSEs connected to the 3-phase distribution cable.

2. The 3-phase charging assembly according to claim 1,
**characterized in** further comprising power relays R1 - R3 on each phase conductor L₁ in, L₂ in, L₃ in.

3. The 3-phase charging assembly according to claim 1 or 2,
**characterized in** further comprising fuses on each input phase conductor L₁ in, L₂ in, L₃ in.

4. The 3-phase charging assembly according to any one of the preceding claims,
**characterized in that** the primary relays R5, R7, R9 are non-latching relays, and the secondary relays R6, R8, R10 - R16 are latching relays.

5. The 3-phase charging assembly according to any one of the claims 1 - 4,
**characterized in** further comprising external communication means for communication of data between the control systems comprised in each EVSE.

6. The 3-phase charging assembly according to any one of claims 1 - 4,
**characterized in** further comprising power line communication, PLC, allowing communicating of data between the control systems comprised in each EVSE.

7. The 3-phase charging assembly according to any one of the preceding claims,
**characterized in that** an EVSE is configured to operate as a master unit controlling the communication of data to and from EVSE's or other communication means comprised in the same 3-phase charging assembly by processing received data, comprising at least relay status, from the EVSE's and send specific instructions to a control system in each of the other EVSE's for controlling routing of an output phase to any of the input phases in each EVSE by connecting and disconnecting each of the primary and secondary relays in the EVSE's.

8. The 3-phase charging assembly according to claim 5 or 6,
**characterized in that** the external communication means or power line communication means is configured to operate as a master unit controlling communication of data to and from the at least one EVSE.

9. The 3-phase charging assembly according to claim 7 or 8,
**characterized in that** the master unit controls connection of the 1-phase load at the output L₁ out to any phase L₁ in, L₂ in, L₃ in at the input of EVSE's comprised in the same 3-phase charging assembly, by transmitting instructions to the control systems in the EVSE's.

10. The 3-phase charging assembly according to any one of the preceding claims,
**characterized in** comprising means for measuring current load on each phase of the electrical lines of the 3-phase distribution cable and where this information is used for performing load balance of available power by connecting and disconnecting each of the primary and secondary relays in the EVSE's.

11. The 3-phase charging assembly according claim 10,
**characterized in that** the at least one EVSE comprises means for measuring current load on each phase of its electrical input lines L₁ in, L₂ in, L₃ in connected to the 3-phase distribution cable, and where this information is used for performing load balance of available power.

12. The 3-phase charging assembly according to claim 7 or 8,
**characterized in that** the master unit is configured to receive load data from other devices connected to, and drawing power from the same 3-phase distribution cable providing power to EVSE's, where said load data defines current load on each phase L₁ in, L₂ in, L₃ in.
